# DEMANDE DE BREVET EUROPEEN

(11) **EP 4 686 407 A1**
(43) Date de publication de la demande: **04.02.2026**
(21) Numéro de dépôt: 25193013.7
(22) Date de dépôt: 31.07.2025
(51) Int. Cl.: A01N 63/10, A01N 63/20, A01N 63/22, A01N 65/03, A01P 21/00, C05F 3/00, C05F 11/08

(54) **BIOSTIMULANT LIQUIDE POUR LA CROISSANCE VÉGÉTALE**

(30) Priorité: 31.07.2024 FR 2408503
(71) Demandeur: Veragrow, 27100 Val-de-Reuil (FR)
(72) Inventeur: SAINT MARTIN, Théo, 27100 VAL-DE-REUIL (FR); GOTTE, Maxime, 27100 VAL-DE-REUIL (FR)
(74) Mandataire: Ex Materia

(57) **Abrégé**

La présente invention concerne un biostimulant liquide comprenant au moins un pourcentage massique de substances humiques compris entre 5% et 15%, un pourcentage massique d'extrait d'au moins une algue compris entre 2% et 20%, un pourcentage massique d'au moins une épice compris entre 0,1% et 5% et un extrait de lombricompost comprenant au moins une souche de bactérie du genre Bacillus, au moins une souche de bactérie du genre Azotobacter et au moins une souche de bactérie du genre Rhizobium.

## Description

La présente invention concerne un biostimulant utilisé comme agent stimulant de la croissance végétale notamment dans l'agriculture. La présente invention concerne plus particulièrement un tel biostimulant obtenu à partir de lombricompost.

Les biostimulants sont des intrants couramment utilisés, notamment dans l'agriculture dite « conventionnelle » et dans l'agriculture dite « biologique », pour améliorer la qualité et les rendements des cultures. Aujourd'hui, dans un contexte de développement de nouvelles méthodes de production, de nouveaux intrants sont recherchés pour favoriser les rendements des cultures tout en améliorant la qualité des sols et leur biodiversité à partir d'intrants répondant aux critères d'agriculture biologique tout en assurant des rendements optimaux.

Certains intrants existants permettent d'apporter aux cultures les éléments minéraux nécessaires à leur croissance. Toutefois, de tels produits ne répondent pas à l'ensemble des contraintes auxquelles sont soumises les plantes. En effet, de tels intrants ne sont pas aptes à assurer, notamment, une protection fongique, une protection contre le stress hydrique, la favorisation de symbioses entre des micro-organismes et les plantes ou encore de rendre disponibles les éléments minéraux naturellement présents dans le sol.

Il en résulte que les exploitants agricoles doivent multiplier les intrants ainsi que les épandages pour offrir à leurs cultures les meilleures conditions de développement afin de favoriser à la fois les rendements et la biodiversité de leurs parcelles.

La présente invention s'inscrit dans ce contexte et se propose de pallier au moins certains inconvénients de l'art antérieur. La présente invention se propose notamment de fournir un biostimulant liquide pour tout type d'agriculture, mais aussi conforme aux exigences de l'agriculture biologique et permettant de répondre efficacement aux différentes contraintes que subissent les plantes durant leur croissance.

Ainsi, la présente invention porte sur un biostimulant liquide comprenant au moins un pourcentage massique de substances humiques compris entre 5% et 15%, un pourcentage massique d'extrait d'au moins une algue compris entre 2% et 20%, un pourcentage massique d'au moins une épice compris entre 0,1% et 5% et un extrait de lombricompost comprenant au moins une souche de bactérie du genre Bacillus, au moins une souche de bactérie du genre Azotobacter et au moins une souche de bactérie du genre Rhizobium.

Le biostimulant est adapté pour accroitre la biomasse microbienne du sol. D'une part, par l'apport de polysaccharides complexes et d'acides aminés issus notamment de l'extrait d'au moins une algue. D'autre part, par l'apport de biomasse microbienne issus de l'extrait de lombricompost. Il est à noter que l'apport de polysaccharides complexes et d'acides aminés peut également provenir, en complément de l'extrait d'au moins une algue, d'extraits de plantes.

Cette composition permet de faciliter la formation de symbioses entre la plante et des micro-organismes, de dégrader et de minéraliser efficacement la matière organique et/ou de solubiliser des nutriments confinés dans le sol.

En outre, les micro-organismes présents dans le biostimulant liquide participent à augmenter la biomasse de la base de la chaine alimentaire. Cet accroissement de la biomasse des premiers maillons de la chaîne alimentaire contribue à augmenter la biomasse des maillons plus tardifs, à titre d'exemple illustratif et non limitatif de l'invention les animaux fongivores ou encore les animaux insectivores, au niveau de la plante. L'accroissement de la microfaune des maillons plus tardifs permet ainsi d'assurer la régulation de ravageurs et de maladies.

Par ailleurs, la forte teneur en substances humiques issues notamment de l'extrait de lombricompost va avoir une action forte sur les propriétés physicochimiques du sol afin d'optimiser la mobilisation des nutriments du sol, qu'ils soient déjà présents et confinés ou apportés par des programmes de fertilisation.

En outre, l'application du biostimulant en début de montaison permet d'assurer une forte vigueur et une stimulation de la croissance lors des stades juvéniles particulièrement sensibles. Les plantes ainsi biostimulées atteignent plus rapidement les stades plus avancés moins sensibles aux ravageurs. De plus, au cours du développement de la culture, son activité photosynthétique est significativement plus marquée.

Par ailleurs, le biostimulant liquide permet de limiter l'impact des stress abiotiques qui surviennent au cours de la culture tels que les sécheresses, fortes chaleurs ou encore les gelées. Ainsi, l'action du biostimulant liquide permet de garantir une récolte qualitative et à haut rendement même sous des contraintes climatiques significatives.

L'application du biostimulant liquide permet également de réaliser des économies de fertilisants en particulier phosphatés et azotés grâce à la présence des substances humiques et des microorganismes bénéfiques du sol.

De plus, le biostimulant liquide présente une capacité significative à induire une meilleure résistance au stress hydrique. Les plantes biostimulées survivent et repartent mieux, notamment grâce à la modulation de l'expression de gènes impliqués dans la gestion du stress hydrique, en particulier ceux impliqués dans le métabolisme de la proline.

Selon une caractéristique de l'invention, le biostimulant liquide comprend un pourcentage massique d'extrait de lombricompost compris entre 10% et 80%.

Selon une caractéristique de l'invention, le biostimulant liquide comprend un pourcentage massique d'extrait de lombricompost compris entre 30% et 50%.

Selon une caractéristique de l'invention, le pourcentage massique de substances humiques est compris entre 5% et 15%.

Selon une caractéristique de l'invention, l'extrait d'au moins une algue est obtenu à partir d'algues de la classe des *Phaeophyceae.*

Selon une caractéristique de l'invention, l'extrait d'algue est obtenu à partir d'algues issues de la famille des *Laminariales.*

Selon une caractéristique de l'invention, le pourcentage massique de l'extrait d'au moins une algue est compris entre 2% et 10%.

Selon une caractéristique de l'invention, le biostimulant liquide comprend un pourcentage massique de potassium compris entre 0,1 et 5%.

Selon une caractéristique de l'invention, le biostimulant liquide comprend un pourcentage massique d'azote compris entre 0,05% et 5%.

Selon une caractéristique de l'invention, le biostimulant liquide comprend un pourcentage massique d'acides aminés compris entre 0,05% et 5%.

Selon une caractéristique de l'invention, le biostimulant liquide comprend un pourcentage massique de phosphore compris entre 0,01% et 5%.

Selon une caractéristique de l'invention, l'au moins une épice est obtenue au moins à partir de *Thymus vulgaris liannaeus* et/ou à partir de *Cinnamomum burmanii* et/ou à partir de *Syzygium aromaticum.*

Selon une caractéristique de l'invention, le pourcentage massique de l'au moins une épice est compris entre 0,5% et 2%.

Selon une caractéristique de l'invention, le biostimulant liquide comprend un pourcentage massique de saccharose compris entre 0,1% et 10%.

Selon une caractéristique de l'invention, le biostimulant liquide comprend un pourcentage massique de mélasse compris entre 2% et 15%.

Selon une caractéristique de l'invention, le biostimulant liquide comprend un pourcentage massique de xanthane compris entre 0,05% et 0,2%.

Selon une caractéristique de l'invention, le biostimulant liquide comprend un pourcentage massique de phénylpropanoïdes compris entre 0,05% et 0,5%.

Selon une caractéristique de l'invention, le biostimulant liquide comprend un pourcentage massique de solvant complété à 100%.

Selon une caractéristique de l'invention, le solvant majoritaire est de l'eau.

Selon une caractéristique de l'invention, le biostimulant liquide comprend un pH compris entre 2 et 12.

Selon une caractéristique de l'invention, le biostimulant liquide comprend un pH compris entre 3 et 5.

Selon une autre caractéristique de l'invention, le biostimulant liquide comprend un pH compris entre 6 et 8.

Selon une autre caractéristique de l'invention, le biostimulant liquide comprend un pH compris entre 8 et 12.

L'invention porte également sur l'utilisation d'un biostimulant liquide conforme à au moins l'une des caractéristiques précédemment évoquées pour l'application du biostimulant liquide sur la partie foliaire d'une plante.

Selon une caractéristique de l'invention, le biostimulant liquide est appliqué dans un dosage compris entre 2 et 6 litres par hectare.

Selon une caractéristique de l'invention le biostimulant liquide est appliqué dans un dosage compris entre 2 et 6 litres par hectare par application et jusqu'à 6 applications par cycle de culture.

Selon une caractéristique de l'invention, le biostimulant liquide est utilisé au sein d'une installation de fertirrigation.

Selon une autre caractéristique de l'invention, le biostimulant liquide est utilisé pour imprégner un fertilisant. Ce fertilisant peut par exemple se trouver sous la forme d'un engrais granulé.

Selon une caractéristique de l'invention, le biostimulant liquide est appliqué à la partie foliaire des plantes.

D'autres caractéristiques, détails et avantages de l'invention ressortiront plus clairement à la lecture de la description qui suit d'une part, et d'exemples de réalisation donnés à titre indicatif et non limitatif en référence aux dessins schématiques annexés d'autre part, sur lesquels :
[Fig.1] représente schématiquement une vue générale d'une plante opérant des symbioses avec des micro-organismes présents dans le biostimulant liquide de sorte à favoriser l'activité photosynthétique et la captation de nutriments ;
[Fig.2] représente un histogramme témoignant de l'effet du biostimulant liquide sur la production de biomasse sèche d'une culture de maïs ;
[Fig.3] représente un histogramme témoignant de l'effet du biostimulant liquide sur la production de protéines d'une culture de maïs.

Les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment considérer des variantes de l'invention ne comprenant qu'une sélection de caractéristiques décrites par la suite de manière isolée des autres caractéristiques décrites, si cette sélection de caractéristiques est suffisante pour conférer un avantage technique ou pour différencier l'invention par rapport à l'état de la technique.

Il convient de noter que les pourcentages massiques qui seront évoqués dans la description qui suivra sont à considérer en fonction de la masse totale de biostimulant considéré.

L'invention propose un biostimulant pour assurer une bonne qualité des cultures et des rendements. Le biostimulant selon l'invention peut être utilisé notamment dans la sylviculture, l'horticulture, la viticulture, ou encore l'agriculture et ceux dans l'ensemble des systèmes de production agricole.

Selon un aspect de l'invention, le biostimulant est une composition liquide destinée à être diluée pour être appliquée, par exemple au moyen d'un pulvérisateur, au sol ou sur un support de culture. À titre d'exemples illustratifs et non limitatifs de l'invention, ce support de culture peut être le système foliaire d'une plante ou encore des graines.

Selon un autre aspect de l'invention, le biostimulant est une composition liquide destinée à être appliquée pure, c'est-à-dire à une concentration maximale, sur un engrais ou amendement solide ou mélangée à un engrais liquide.

La fluidité de la composition du biostimulant selon l'invention s'apprécie selon la viscosité de ce dernier qui est comprise entre 0,02 et 0,25 Pascal-seconde.

En outre, pour permettre la pulvérisation de la composition par des systèmes de pulvérisation conventionnels notamment mis en œuvre dans l'agriculture, le biostimulant comprend des particules dont la taille est inférieure à 250µm, préférentiellement inférieure à 200µm, plus préférentiellement inférieure à 150µm, encore plus préférentiellement inférieure à 100µm.

Le biostimulant selon l'invention est un produit miscible au moins avec l'eau, préférentiellement le biostimulant selon l'invention est miscible avec toute solution aqueuse homogène. On comprend de ce qui précède que le mélange du biostimulant avec de l'eau permet d'obtenir un produit homogène. Ainsi, le biostimulant selon l'invention peut être pulvérisé sur des cultures par un pulvérisateur, alternativement le biostimulant peut être utilisé dans un système d'irrigation d'une installation de fertirrigation, alternativement le biostimulant peut également être utilisé dans des systèmes de production aéroponiques. Dans ces systèmes de production, la miscibilité du biostimulant permet son utilisation sans risquer d'obstruer les différentes buses de projection utilisées. Par ailleurs, cette miscibilité du biostimulant permet également son utilisation dans des systèmes hydroponiques dans lesquels le biostimulant peut être réparti de façon homogène.

Le biostimulant comprend de l'extrait de lombricompost. Le lombricompost est obtenu par la dégradation de matières organiques traitées par des lombrics. Ce lombricompost, également connu sous les dénominations de compost de vers ou encore d'humus de vers, peut être obtenu à partir de l'une quelconque des espèces de vers de terre appropriées à la formation de lombricompost. Le lombricompost peut notamment être obtenu à partir de l'une quelconque des espèces de lombrics suivantes : *Eisenia fetida, Eisenia andrei, Eisenia hortensis, Eudrilus eugeniae, Lumbricus rubellus.*

Le lombricompost est un élément essentiel du biostimulant, ce lombricompost présente de nombreux effets biostimulants. Ce lombricompost se caractérise notamment par une forte capacité à améliorer la qualité des sols en augmentant le ratio C/N, en améliorant l'activité enzymatique des sols, particulièrement l'activité des phosphatases permettant de rendre disponibles les phosphates du complexe argilohumique et des uréases permettant de minéraliser l'azote uréique.

Le lombricompost comprend une grande richesse en micro-organismes aptes à générer des symbioses avec notamment le système racinaire des plantes permettant de stimuler la croissance des plantes et d'améliorer la fixation de l'azote de ces plantes. Ces micro-organismes présentent également une activité enzymatique leur permettant de solubiliser les phosphates présents dans le sol et d'améliorer la protection des plantes contre des maladies telluriques.

De plus, le lombricompost présent dans le biostimulant permet de favoriser le développement dans les sols de nématodes fongivores, bactériophages et nématophages ainsi que de champignons mycorhiziens et bactéries PGPR acronyme anglais pour « *Plant Growth Promoting Rhizobacteria* »*.* Ces micro-organismes se développant suite à l'apport en biostimulant dans le sol améliorent davantage l'action du biostimulant comme stimulateur de fertilité des sols, de réducteur de la sensibilité aux stress abiotiques et biotiques et de stimulateur de croissance.

Le lombricompost précédemment évoqué passe pas une étape d'extraction pour obtenir de l'extrait de lombricompost permettant de mettre en solution toutes les caractéristiques du lombricompost précédemment évoquées.

Plus spécifiquement, cet extrait de lombricompost est obtenue par un mélange de 50kg à 200kg de matière brute de lombricompost, c'est-à-dire du lombricompost à l'état solide traité par des lombrics, dans un volume d'eau compris entre 350 litres et 450 litres. De façon préférentielle, l'extraction du lombricompost est obtenue par un mélange de 75kg à 125kg de matière brute de lombricompost dans un volume de 400 litres d'eau. Le mélange du lombricompost dans le volume est réalisé sous agitation vive puis la phase liquide est récupérée et filtrée pour éliminer les particules présentant un diamètre supérieur à 100µm. Cette filtration peut être réalisée, par exemple, par centrifugation, décantation, ou tamisage.

Aussi, selon l'invention, le biostimulant comprend au moins une souche de bactérie du genre Bacillus, au moins une souche de bactérie du genre Azotobacter et au moins une souche de bactérie du genre Rhizobium. Ces bactéries sont utilisées pour leur rôle biostimulateur favorisant le développement des plantes.

Plus spécifiquement, le biostimulant peut notamment comprendre une combinaison de bactéries conforme à l'invention parmi *Azotobacter chroococcum, Azotobacter armeniacus, Azotobacter nigricans*, *Bacillus subtilis, Paenibacillus spp., Pseudomonas fluorescens*, *Pseudomonas sp., Brevibacterium, Mesorhizobium, Lysinibacillus, Bradyrhizobium, Azospirillum sp., Dietzia natronolimnaca*, *Flavobacterium sp., Brevundimonas sp., Rhizobium sp..*

Ces bactéries sont présentes dans le biostimulant dans un état de dormance permettant de limiter fortement l'activité microbienne au sein du biostimulant une fois conditionné. Pour favoriser la mise en dormance des microorganismes, le biostimulant comprend des conservateurs tels que le cinnamaldéhyde. De plus, la dormance des bactéries présentes dans le biostimulant liquide est permise par le maintien du biostimulant liquide à un pH acide. Aussi, selon un mode de réalisation de l'invention, le pH du biostimulant est compris entre 2 et 6, préférentiellement le pH du biostimulant est compris entre 3 et 5, préférentiellement le pH du biostimulant est compris entre 3,5 et 4,5, plus préférentiellement le pH du biostimulant est compris entre 3,8 et 4,3, encore plus préférentiellement le pH du biostimulant est compris entre 4,0 et 4,3.

Un pH du biostimulant compris dans les plages mentionnées permet de limiter la dégradation des composés par les micro-organismes présents dans le biostimulant dans un pH trop acide et de limiter l'activité microbienne dans un pH trop neutre. Plus spécifiquement un pH de 4,0 permet de limiter la dégradation des composés et des micro-organismes présents dans le biostimulant mieux qu'un pH de 3,8 et mieux qu'un pH de 3,5. De plus, un pH de 4,3 permet de limiter l'activité microbienne au sein du biostimulant mieux qu'un pH de 4,5 et mieux qu'un pH de 5. Dès lors, on comprend qu'un compromis doit être trouvé pour limiter l'activité microbienne dans le biostimulant sans dégrader les composés et les micro-organismes présents dans le biostimulant. Aussi, les inventeurs ont pu déterminer qu'un pH compris entre 3,5 et 4,5 et préférentiellement entre 3,8 et 4,3 permet d'obtenir un compromis optimal.

Le pH du biostimulant est maintenu dans les plages souhaitées par un apport en acide citrique dans un pourcentage massique compris 0,1% et 3%, préférentiellement entre 0,5% et 1,5%. Il convient de noter que le pourcentage massique d'acide citrique intégré dans le biostimulant est déterminé de sorte à obtenir un pH d'intérêt du biostimulant conforme à ce qui a été évoqué précédemment. De plus, tout autre acidifiant pourra être utilisé dans des pourcentages massiques optimaux dans l'objectif d'obtenir un pH conforme à ce qui a été précisé précédemment.

Les bactéries ainsi mises en dormance seront activées lors de l'élévation naturelle du pH intervenant lors de l'utilisation du biostimulant, par exemple lors de la dilution du biostimulant dans un volume d'eau à pH neutre avant pulvérisation sur des cultures.

Il est toutefois à noter que dans un mode de réalisation alternatif de l'invention, le pH du biostimulant liquide peut être maintenu à pH neutre, et plus précisément entre 6 et 8. Dans ce mode de réalisation de l'invention, la présence des conservateurs précédemment évoqués permet à elle seule de maintenir en dormance les microorganismes présents dans le biostimulant liquide. Au besoin, la quantité de conservateur peut être augmentée de sorte à s'assurer du maintien en dormance des microorganismes. L'application d'un tel pH neutre compris entre 6 et 8 permet ainsi de conserver le pouvoir tampon du biostimulant liquide et de limiter la dégradation des microorganismes.

Dans un autre mode de réalisation de l'invention, le pH du biostimulant est maintenu entre 8 et 12. Dans ce mode de réalisation de l'invention, la présence des conservateurs et d'un pH alcalin permettent de maintenir la dormance des microorganismes. De plus, un pH basique de la solution permet de mieux solubiliser notamment les acides humiques présents dans le biostimulant liquide. Il est à noter que pour la mise en œuvre de ce mode de réalisation de l'invention, le biostimulant liquide comprend un agent alcalin tel que la cendre, la chaux ou encore la soude caustique.

En outre, le lombricompost comprend de nombreux métabolites secondaires tels que des composés phénoliques favorisant la ramification du système racinaire et assurant une protection contre les stress oxydatifs.

De plus, le lombricompost comprend de nombreuses hormones végétales que l'on retrouve dans l'extrait de lombricompost. Ces hormones végétales sont notamment synthétisées par certaines bactéries présentes dans la microflore des lombrics et notamment des auxines, gibbérellines, cytokinines et des brassinostéroides. L'apport en phytohormones assuré par le biostimulant permet de stimuler efficacement la croissance des plantes, et notamment de favoriser la germination des graines et la croissance végétative. Par ailleurs, une telle présence en phytohormones permet également d'améliorer significativement l'activité photosynthétique et la taille des fruits des plantes. Une telle stimulation des plantes permet ainsi d'améliorer les rendements des cultures biostimulées par le biostimulant conforme à la présente invention.

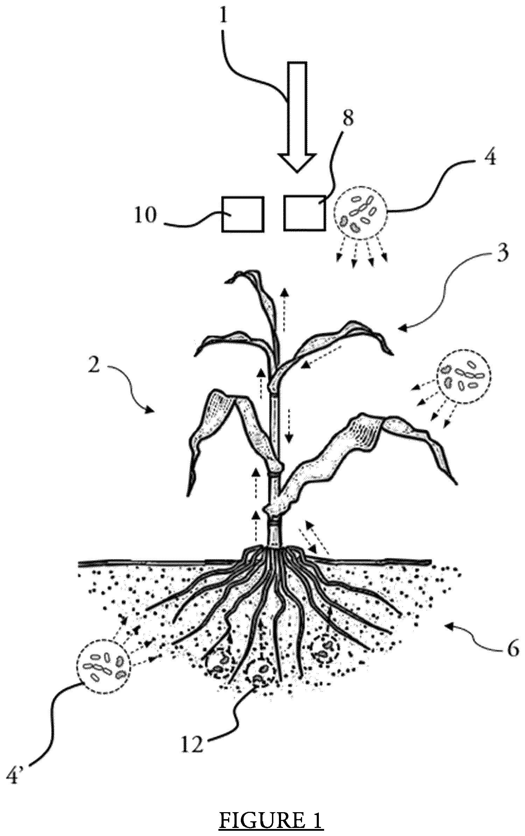

La figure 1 illustre notamment ces actions de l'extrait de lombricompost sur une plante 2. Plus spécifiquement, la figure 1 illustre l'impact d'un biostimulant liquide 1 conforme à la présente invention riche en extrait de lombricompost, en extraits de végétaux et en épices qui seront décrits plus en détail dans la description qui suivra.

En effet, l'introduction du biostimulant liquide 1 conforme à la présente invention au niveau de la plante 2, et plus spécifiquement au niveau de son système foliaire 3, permet d'apporter d'une part, la richesse en micro-organismes 4 au plus près de la plante 2, et d'autre part des substances humiques 8 et un extrait d'au moins une algue 10, tel qu'il sera décrit plus en détail dans la description qui suivra, qui comprend des laminaranes qui stimulent la croissance de la plante 2 et améliorent significativement les défenses immunitaires de la plante 2. Il est à noter que le biostimulant liquide 1 est appliqué à un stade juvénile de la plante 2.

Ce dépôt des micro-organismes 4 au plus près de la plante 2 permet de favoriser la formation de symbioses 12 entre ces micro-organismes 4 et un système racinaire 6 de la plante 2. En outre, ces symbioses 12 associées aux substances humiques 8 favorisent la captation des nutriments dans le sol ce qui permet d'améliorer le système foliaire 3 de la plante 2 et donc son activité photosynthétique.

De plus, l'apport du biostimulant liquide 1 directement sur le système foliaire 3 de la plante 2 permet de former une couverture des parties aériennes de la plante 2 par les micro-organismes 4. Cette couverture limite le développement de maladies et stimule la croissance des parties aériennes. Par ailleurs, les composés phénoliques issus des extraits de végétaux et les substances humiques 8 ont une action anti-stress, en réduisant l'impact des stress oxydatifs liés aux stress environnementaux. De plus, les sucres oligosaccharides et polysaccharides issus notamment des extraits de végétaux apportent une protection à la plante 2 contre les stress thermiques et hydriques.

Selon un mode de réalisation de l'invention, le biostimulant comprend un pourcentage massique d'extrait de lombricompost compris entre 10% et 80%, préférentiellement entre 20% et 80%, plus préférentiellement entre 30% et 80%, plus préférentiellement entre 30% et 70%, plus préférentiellement entre 30% et 60%, encore plus préférentiellement entre 40% et 50%.

L'extrait de lombricompost est obtenu par l'extraction des composés et de molécules d'intérêt du lombricompost résultant de la dégradation de la matière organique par les lombrics. Ce lombricompost est une matière solide qui n'est pas compatible avec un épandage par pulvérisation d'un produit liquide. On comprend de ce qui précède que l'extraction de lombricompost permet de conserver les composés et éléments d'intérêt du lombricompost tout en permettant, par exemple, la pulvérisation de cet extrait de lombricompost.

Plus spécifiquement, l'extrait de lombricompost est obtenu par l'extraction d'un pourcentage massique de lombricompost à l'état solide compris entre 2% et 40%, préférentiellement entre 10% et 30%, plus préférentiellement entre 10% et 20% dans un volume d'eau complété à 100%.

Dans les plages de pourcentage massique de lombricompost utilisé pour obtenir l'extrait de lombricompost décrit précédemment, l'extraction des composés d'intérêt présents dans la matière brute traitée par les lombrics est optimale. En effet, plus la teneur en matière brute est importante et plus la teneur en composés d'intérêt ou en micro-organismes dans l'extrait de lombricompost est importante. Toutefois, les inventeurs ont pu mettre en évidence qu'au-delà de 40% de lombricompost utilisé pour obtenir l'extrait de lombricompost, l'extraction n'est pas optimale et de nombreux composés d'intérêt ne sont pas extraits. Cependant, dans des teneurs trop faibles et plus précisément inférieures à 2%, la teneur en composés d'intérêt dans l'extrait de lombricompost est trop faible limitant son efficacité.

Aussi, on comprend qu'un compromis entre la qualité de l'extraction réalisée et la teneur en composés d'intérêt doit être trouvé. Les inventeurs ont pu déterminer que ce compromis optimal est atteint dans un pourcentage massique d'extrait de lombricompost compris entre 5% et 30%, et préférentiellement entre 10% et 30%.

En outre, l'extrait de lombricompost comprend de hautes teneurs en substances humiques, et en particulier en acides humiques et en acides fulviques. Les substances humiques, telles qu'elles sont documentées notamment par Rose et al. 2014 «A Meta-Analysis and Review ofPlant-Growth Response to Humic Substances» et Nardi et al. 2021 « Chemical Structure and Biological Activity ofHumic Substances Define Their Role as Plant Growth Promoters »*,* améliorent significativement la biodisponibilité des macro et micronutriments par leur capacité à chélater les minéraux. De plus, leurs formes chimiques complexes offrent une forte capacité à tamponner le pH du sol et à former des agrégats contribuant à améliorer la structure physique et physicochimique du sol. Outre leur action sur le sol limitant l'occurrence des stress hydriques et salins, les substances humiques activent les systèmes enzymatiques antioxydants permettant d'augmenter la résistance des plantes à ces mêmes stress.

Par ailleurs, les substances humiques ont également une action de type hormonale stimulant la croissance, notamment racinaire. Cette action a été mise en avant par Rose et al. 2014 particulièrement sur les substances humiques issues de lombricompost. L'origine de cette action est généralement attribuée à leurs formes complexes qui permettent d'enfermer au sein de ces grandes molécules des plus petites telles que les phytohormones (Canellas et al., 2002, 2015; Wong et al., 2020). Aussi, les substances humiques provenant du lombricompost sont formées en présence de phytohormones et parviennent à les enfermer au sein de leurs structures moléculaires. Ces substances humiques améliorent donc significativement l'efficacité du biostimulant.

Aussi, selon l'invention, le biostimulant comprend un pourcentage massique de substances humiques compris entre 2% et 20%, préférentiellement le biostimulant comprend un pourcentage massique de substances humiques compris entre 5% et 15%, plus préférentiellement le biostimulant comprend un pourcentage massique de substances humiques compris entre 6% et 10%. Il est à noter que ces pourcentages massiques de substances humiques sont obtenus conformément à la méthode d'analyse RD 1110/1991 (BOE 170 17/07/1991 Mét 4).

Plus spécifiquement, ces substances humiques comprennent des acides humiques favorisant notamment la disponibilité des nutriments et des acides fulviques favorisant l'assimilation des nutriments. Les acides humiques peuvent représenter entre 0,1% et 5% du pourcentage massique du biostimulant liquide et les acides fulviques peuvent représenter entre 1,9% et 15% du pourcentage massique du biostimulant liquide. De façon préférentielle, les acides humiques représentent entre 0,5% et 2% du pourcentage massique du biostimulant liquide. De façon préférentielle, les acides fulviques représentent entre 3% et 10% du pourcentage massique du biostimulant liquide.

Les inventeurs ont pu déterminer qu'une teneur trop importante en substances humiques dans le biostimulant augmente la possibilité de précipitation de particules au sein du biostimulant. De plus, une teneur en substances humiques trop importante augmente le ratio C/N des sols traités ce qui limite la disponibilité et l'assimilation de l'azote par les plantes.

Dans certains modes de réalisation, le pourcentage massique d'acide humique est égal au pourcentage massique d'acide fulvique à plus ou moins 1%. Dans d'autres modes de réalisation, le pourcentage massique d'acide fulvique est supérieur au pourcentage d'acide humique d'au moins 2%.

Les résultats présentés ci-dessous en lien avec le tableau 1 permettent de mettre en évidence l'impact de l'utilisation du biostimulant liquide, conforme à la présente invention, sur différentes cultures par rapport à un témoin appartenant à la même culture et sur lequel aucun intrant n'a été apporté.

L'utilisation du biostimulant liquide à une dose de 3 litres par hectare (L/ha) sur une culture de blé au stade de croissance à laquelle les épis sont de 1 cm permet d'augmenter les rendements de 3,4 quintaux par hectare (q/ha) ce qui représente une hausse de 5,5% des rendements par rapport à une culture témoin. De plus, les essais réalisés sur une culture de blé ont permis de mettre en évidence que l'utilisation du biostimulant liquide augmente la teneur en protéine des grains de 4,1% par rapport à la culture témoin et la mesure de Brix de 3,2%.

Par ailleurs, l'utilisation du biostimulant sur une culture de colza et d'orge de printemps à une dose de 3 litres par hectare au stade de croissance de 3-4 feuilles a permis d'augmenter les rendements de respectivement 5,38 q/ha et de 3,4 q/ha ce qui correspond respectivement à une hausse des rendements par rapport à une culture témoin de 15% et de 4,3%.

L'utilisation du biostimulant liquide a également démontré ses effets sur la culture de lin pour laquelle une dose de biostimulant liquide de 5 L/ha appliquée au moment de la levée permet d'augmenter la longueur des tiges de 4,1 cm en moyenne par rapport à la culture témoin ce qui se traduit par une augmentation du rendement en paille de 92.54 kg soit une hausse des rendements de 14%.

Des résultats d'augmentation des rendements illustrés dans le tableau 1 sont également visibles pour la betterave, la pomme de terre, le soja et la lentille pour lesquels les rendements ont augmenté respectivement de 8%, 16%, 6% et 6%.

Plus spécifiquement, les essais menés sur une culture de la pomme de terre ont mis en évidence une augmentation des rendements dans le calibre d'intérêt >45mm de 22%.

**[Tableau 1]**

| Culture | | Dosage (L/ha) | Stade | Rendement (q/ha) | Rendement en paille (kg/ha) | Evolution Biostimulant /Témoin |
|---|---|---|---|---|---|---|
| Blé | Biostimulant | 3 | Épi 1cm | 66,2 | - | +5,5% |
| | Témoin | 0 | - | 62,8 | - | |
| Colza | Biostimulant | 3 | 3-4 feuilles | 40,29 | - | +15% |
| | Témoin | 0 | - | 34,91 | - | |
| Orge de printemps | Biostimulant | 3 | 3-4 feuilles | 82,9 | - | +4,3% |
| | Témoin | 0 | - | 79,5 | - | |
| Lin | Biostimulant | 5 | Levée | - | 745,03 | +14% |
| | Témoin | 0 | - | - | 652,49 | |
| Betterave | Biostimulant | 3 + 3 | 2-4 feuilles Fermeture rang | 1031,7 | - | +8% |
| | Témoin | 0 | - | 959 | - | |
| Pomme de terre | Biostimulant | 2 x 5 | Début de floraison à intervalle de 15 jours | 471,2 | | +16% |
| | Témoin | | - | 350 | | |
| Soja | Biostimulant | 3 | 4 feuilles | 21,5 | - | +6% |
| | Témoin | 0 | - | 20,3 | - | |
| Lentille | Biostimulant | 3 | 2-4 feuilles | 17,5 | - | +6% |
| | Témoin | 0 | - | 16 ,5 | - | |

Selon un aspect de l'invention, le biostimulant comprend un pourcentage massique d'extrait d'au moins une algue compris entre 2% et 20%, préférentiellement compris 2% et 15%, plus préférentiellement le biostimulant comprend un pourcentage massique d'au moins une algue compris entre 2% et 10%. Les inventeurs ont pu mettre en évidence que la présence d'extrait d'au moins une algue dans le biostimulant permet de stimuler la croissance des plantes et également les résistances aux stress hydrique, salin et thermique. De plus, les inventeurs ont également mis en évidence que la présence d'extraits d'algues dans les proportions précédemment définies permet d'améliorer les rendements et la qualité des récoltes.

L'extrait d'au moins une algue dans le biostimulant est riche en polysaccharides complexes aux propriétés biostimulantes. Ainsi, l'extrait d'au moins une algue comprend une combinaison d'au moins un polysaccharide parmi le mannitol, fucoïdanes, carraghénanes, laminarines.

En outre, l'extrait d'au moins une algue permet d'activer des gènes de l'immunité responsables de la synthèse de protéines PR et de composés phénoliques. L'extrait d'au moins une algue permet également d'augmenter le taux de chlorophylle et l'activité photosynthétique des plantes. De plus, une part importante des effets de l'extrait d'au moins une d'algue est attribuée à la présence de phytohormones notamment les auxines, les gibbérellines et les cytokinines venant accroitre la teneur en phytohormones du biostimulant. L'action de ces phytohormones va se traduire, entre autres, par une biomasse aérienne plus importante ainsi qu'un développement accru du système racinaire. Cette augmentation des systèmes racinaire et aérien permet de maximiser le prélèvement d'eau et de nutriments favorisant les rendements des cultures.

Les inventeurs ont tout particulièrement mis en évidence que l'apport de l'extrait d'au moins une algue est tout particulièrement optimisé chez les algues brunes de la classe des *Phaeophyceae.* Plus spécifiquement, selon un aspect de l'invention, l'extrait d'au moins une algue est obtenu à partir d'algues issues de la famille des *Laminariales.* Alternativement ou en combinaison, l'extrait d'au moins une algue peut être obtenu à partir d'algues issues de la famille des *Fucaceae.* À titre d'exemple, l'extrait d'au moins une algue peut être obtenu à partir d'*Ascophyllum nodosum.*

Plus spécifiquement, l'extrait d'au moins une algue comprend entre 15% et 17% de mannitol, entre 4% et 8% de fucoïdane, un pourcentage massique de laminarine supérieur à 20%. Ces valeurs sont exprimées en rapport masse / masse de produit sec, la teneur en matière sèche de l'extrait d'au moins une algue étant comprise entre 7% et 15%. Cet extrait d'algue peut notamment être trouvé sous l'appellation commerciale « ALGANACT^{™} EVP LAM 20 ».

Dans certains modes de réalisation, le biostimulant comprend une haute teneur en acides aminés provenant de sources végétales et notamment de l'extrait de lombricompost et de l'extrait d'au moins une algue. Ces acides aminés d'origine exogène aux plantes permettent aux plantes de surmonter des situations de stress notamment liées aux périodes de sécheresse et à l'application de désherbant. En effet, leur origine exogène apporte aux plantes des acides aminés directement convertibles en protéines sans requérir leur biosynthèse.

Le biostimulant peut ainsi comprendre une combinaison d'acides aminés d'au moins l'un quelconque des acides aminés parmi Alanine, Arginine, Asparagine, Aspartate, Cystéine, Glutamate, Glutamine, Glycine, Histidine, Isoleucine, Leucine, Lysine, Méthionine, Phénylalanine, Proline, Pyrrolysine, Sélénocystéine, Sérine, Thréonine, Tryptophane, Tyrosine, Valine.

Aussi, le biostimulant comprend dans certains modes de réalisation un pourcentage massique d'acides aminés compris entre 0,05% et 5%, préférentiellement compris entre 0,5% et 3%, plus préférentiellement compris entre 1% et 2%.

Les inventeurs ont pu mettre en évidence que ces teneurs en acides aminés permettent de stimuler la nutrition azotée de la plante. De plus, dans ces teneurs, les acides aminés favorisent l'implantation des micro-organismes pour leur permettre une meilleure adaptation dans l'environnement dans lequel se trouve la plante.

En effet, les acides aminés sont une source importante de nutriments pour les micro-organismes des sols permettant alors d'accroitre la biomasse microbienne des sols et par voie de conséquence leurs activités métaboliques, c'est-à-dire la dégradation et la minéralisation de la matière organique, ainsi que leurs activités PGPR.

Il est à noter qu'à l'instar des polysaccharides, les acides aminés sont des sources de nutriments importantes pour les microorganismes.

Dans certains modes de réalisation, le biostimulant comprend un pourcentage massique de potassium compris entre 0,1% et 5%, préférentiellement entre 0,5% et 2%, un pourcentage massique d'azote compris entre 0,05% et 5%, préférentiellement entre 0,1% et 2% et un pourcentage massique de phosphore compris entre 0,01% et 0,5%, préférentiellement entre 0,05% et 0,2%.

Dans certains modes de réalisation, le biostimulant comprend un pourcentage massique de mélasse compris entre 2% et 15%, préférentiellement entre 5% et 13%, plus préférentiellement entre 5% et 10%. Cette mélasse peut être obtenue à partir de betteraves sucrières ou encore à partir de cannes à sucre. Les inventeurs ont pu mettre en évidence que dans ces proportions, l'apport de mélasse permet d'apporter une haute teneur en nutriments et en composés phénoliques sans impacter la solubilité des autres composés lors de la préparation du biostimulant.

L'ajout de mélasse dans le biostimulant permet de valoriser un rebut de la production de sucre qui est très riche en sucres, en minéraux et en composés phénoliques qui ont des propriétés antioxydantes. La mélasse présente dans le biostimulant permet d'améliorer la fertilité des sols et notamment dans le cadre d'une fertilisation organique. De plus, la présence de mélasse dans le biostimulant améliore la croissance racinaire et aérienne des jeunes plantules et tout particulièrement en association avec des bactéries PGPR telles que celles associées au lombricompost auxquelles la mélasse apporte une source importante de nutriments pour leur développement.

En outre, la richesse en sucres et en nutriments présents dans la mélasse améliore la qualité du substrat pour la croissance des populations de micro-organismes. Ainsi, la mélasse participe à la revitalisation des sols stressés, par exemple à la suite d'inondations ou à une mécanisation excessive lors de la préparation des sols, et favorise la multiplication des bactéries commensales et bénéfiques qui limitent l'installation de pathogènes.

Le biostimulant peut ainsi comprendre un pourcentage massique de saccharose compris entre 0,1% et 10%, préférentiellement entre 0,3% et 7%, préférentiellement entre 0,5% et 5%, plus préférentiellement entre 1% et 4%.

En outre, le biostimulant liquide comprend selon l'invention un pourcentage massique d'au moins une épice compris entre 0,1% et 5%, préférentiellement le biostimulant liquide comprend un pourcentage massique d'au moins une épice compris entre 0,5% et 2%. Ce pourcentage massique est obtenu en opérant une extraction des épices. Ces épices peuvent être sélectionnées seules ou en combinaison parmi *Thymus vulgaris liannaeus, Cinnamomum burmanii, Syzygium aromaticum.*

Plus spécifiquement, l'au moins une épice contenue dans le biostimulant liquide selon l'invention est obtenue par une infusion de ladite au moins une épice lors de l'étape d'extraction du lombricompost. En effet, lors de l'étape d'extraction du lombricompost, entre 1,5kg et 35kg de ladite au moins une épice sont introduits dans un volume d'eau conforme à ce qui a été décrit précédemment en même temps que la matière brute de lombricompost. De façon préférentielle, entre 10kg et 20kg de ladite au moins une épice sont introduites dans ledit volume d'eau.

Ces épices participent à renforcer l'action antistress de du biostimulant liquide à l'aide d'extraits d'épices riches en phénylpropanoïdes qui vont avoir également une action antimicrobienne participant à la conservation de nos produits.

Par ailleurs les phénylpropanoïdes et flavonoïdes comprennent de très nombreux métabolites spécialisés qui influencent un large éventail de processus chez les plantes, notamment la dispersion des graines, le transport de l'auxine, la photoprotection et la protection contre les insectes herbivores. Ils ont aussi un rôle d'inhibition de la formation des dérivés réactifs de l'oxygène contribuant ainsi à réduire les stress oxydatifs.

De plus, les inventeurs ont pu déterminer que dans ces pourcentages massiques d'épices dans le biostimulant liquide, on s'assure que l'extraction est optimale tout en s'assurant que l'extrait obtenu comprend un maximum de composés d'intérêt.

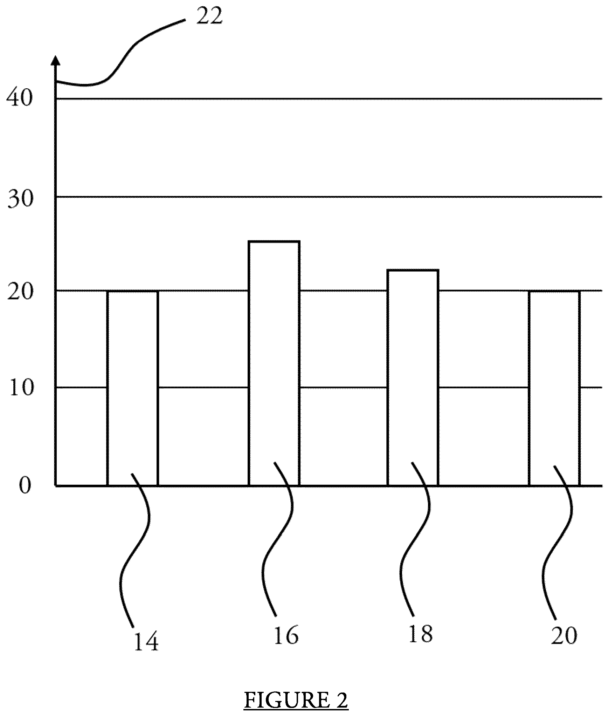

La figure 2 représente un histogramme témoignant de l'impact respectif des substances humiques et de l'extrait d'au moins une algue, de l'extrait de lombricompost et de l'au moins une épice, et du biostimulant liquide par rapport à un témoin traité à l'eau sur la matière sèche produite par une culture de maïs.

Plus précisément, la figure 2 représente une première modalité 14 correspondant à une culture témoin pour laquelle seulement un apport en eau a été effectué, une deuxième modalité 16 correspondant à une culture pour laquelle un apport en biostimulant liquide selon l'invention a été effectué, une troisième modalité 18 correspondant à une culture pour laquelle un apport en extrait de lombricompost et de l'au moins une épice conformément à la présente invention a été effectué et une quatrième modalité 20 correspondant à une culture pour laquelle un apport en substances humiques et en extrait d'algue conformément à la présente invention a été effectué.

Ces différentes modalités réalisées au cours d'un même essai permettent de mettre en évidence l'impact respectif de ces essais sur la production de biomasse sèche 22 en gramme réalisée par la culture considérée. Tout d'abord, il est remarquable que la quatrième modalité 20 ne présente pas de différence significative par rapport à la première modalité 14. En effet, les substances humiques et l'extrait d'au moins une algue participent à favoriser une ramification racinaire permettant de développer un fort réseau de racine pour mieux capter les nutriments de surfaces.

En revanche, la troisième modalité 18 témoigne d'un effet bénéfique de l'extrait de lombricompost et de l'au moins une épice sur la production de biomasse sèche 22. En effet, l'extrait de lombricompost et de l'au moins une épice permet de favoriser l'élongation racinaire pour générer un encrage en profondeur de la plante, permettant notamment une meilleure captation de l'eau et une meilleure résistance au stress hydrique. La deuxième modalité 16 regroupe ces différents avantages et permet de générer une synergie dans les effets entre la ramification racinaire et l'élongation racinaire améliorant significativement la croissance de la plante comme en témoigne la production de biomasse sèche 22.

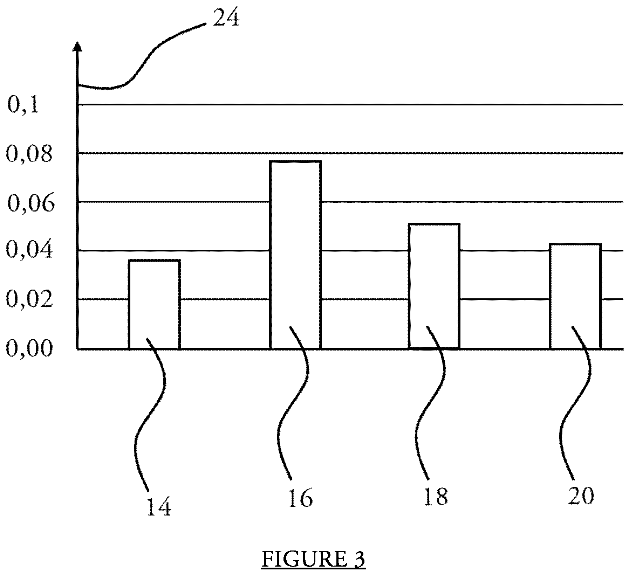

La figure 3 représente la première modalité 14, la deuxième modalité 16, la troisième modalité 18 et la quatrième modalité 20 comparées les unes par rapport aux autres en fonction de la quantité de protéines totales produites 24 en mg/mL. Il est remarquable sur la figure 3, que la deuxième modalité 16 permet d'obtenir un effet significativement plus important sur la production de protéines et notamment des feuilles de la culture de maïs. Cette augmentation significativement plus importante pour la deuxième modalité 16 par rapport à la première modalité 14, en comparaison de la troisième modalité 18 et de la quatrième modalité 20, résulte de l'impact cumulatif et non antagoniste des substances humiques et de l'extrait d'algue avec l'extrait de lombricompost et l'au moins une épice.

En outre, dans certains modes de réalisation, le biostimulant comprend un pourcentage massique de phénylpropanoïdes compris entre 0,05% et 0,5%, préférentiellement entre 0,1% et 0,3%.

Dans certains modes de réalisation, le biostimulant comprend un pourcentage massique de xanthane compris entre 0,05% et 0,2%. Le xanthane permet de créer un maillage permettant de retenir en suspension les particules et éviter ainsi la sédimentation des particules. Les inventeurs ont pu déterminer que dans ces pourcentages massiques, le xanthane permet de retenir en suspension les particules présentes dans le biostimulant tout en ajustant la viscosité à niveau satisfaisant entre 0,02 Pa.s et 0,25 Pa.s. En outre, le xanthane est un polysaccharide favorisant le développement microbien des sols traités.

La présente invention atteint bien le but qu'elle s'était fixé en proposant un biostimulant liquide conforme aux exigences de l'agriculture biologique permettant de répondre efficacement aux différentes contraintes que subissent les plantes durant leur croissance.

La présente invention ne saurait toutefois se limiter aux modes de réalisation décrits ici et elle s'étend également à tout moyen et toute configuration équivalents ainsi qu'à toute combinaison techniquement opérante de tels moyens.

## Revendications

1. Biostimulant liquide comprenant au moins un pourcentage massique de substances humiques compris entre 5% et 15%, un pourcentage massique d'extrait d'au moins une algue compris entre 2% et 20%, un pourcentage massique d'au moins une épice compris entre 0,1% et 5% et un extrait de lombricompost comprenant au moins une souche de bactérie du genre Bacillus, au moins une souche de bactérie du genre Azotobacter et au moins une souche de bactérie du genre Rhizobium.

2. Biostimulant liquide selon la revendication 1, comprenant un pourcentage massique d'extrait de lombricompost compris entre 10% et 80%.

3. Biostimulant liquide selon l'une quelconque des revendications 1 et 2, comprenant un pourcentage massique d'extrait de lombricompost compris entre 30% et 50%.

4. Biostimulant liquide selon l'une quelconque des revendications 1 à 3, dans lequel le pourcentage massique de substances humiques est compris entre 5% et 15%.

5. Biostimulant liquide selon l'une quelconque des revendications 1 à 4, dans lequel l'extrait d'au moins une algue est obtenu à partir d'algues de la classe des Phaeophyceae.

6. Biostimulant liquide selon la revendication 5, dans lequel l'extrait d'algue est obtenu à partir d'algues issues de la famille des Laminariales.

7. Biostimulant liquide selon l'une quelconque des revendications 1 à 6, dans lequel le pourcentage massique de l'extrait d'au moins une algue est compris entre 2% et 10%.

8. Biostimulant liquide selon l'une quelconque des revendications 1 à 7, comprenant un pourcentage massique d'acides aminés compris entre 0,05% et 5%.

9. Biostimulant liquide selon l'une quelconque des revendications 1 à 8, dans lequel l'au moins une épice est obtenue au moins à partir de *Thymus vulgaris liannaeus* et/ou à partir de *Cinnamomum burmanii* et/ou à partir de *Syzygium aromaticum.*

10. Biostimulant liquide selon l'une quelconque des revendications 1 à 9, dans lequel le pourcentage massique de l'au moins une épice est compris entre 0,5% et 2%.

11. Biostimulant liquide selon l'une quelconque des revendications 1 à 10, comprenant un pourcentage massique de saccharose compris entre 0,1% et 10%.

12. Biostimulant liquide selon l'une quelconque des revendications 1 à 11, comprenant un pourcentage massique de mélasse compris entre 2% et 15%.

13. Biostimulant liquide selon l'une quelconque des revendications 1 à 12, comprenant un pourcentage massique de xanthane compris entre 0,05% et 0,2%.

14. Utilisation d'un biostimulant liquide selon l'une quelconque des revendications précédentes pour l'application du biostimulant liquide sur la partie foliaire d'une plante.

15. Utilisation d'un biostimulant liquide selon la revendication précédente, dans lequel le biostimulant liquide est appliqué dans un dosage compris entre 2 et 6 litres par hectare.
